# EUROPEAN PATENT APPLICATION

(11) **EP 4 270 153 A1**
(43) Date of publication of application: **01.11.2023**
(21) Application number: 21915928.2
(22) Date of filing: 23.11.2021
(51) Int. Cl.: G06F 1/3203

(54) **ENERGY-SAVING METHOD FOR A LOCKING SYSTEM**

(30) Priority: 28.12.2020 RU 2020143258
(71) Applicant: Limited Liability Company "Electronic Access", Sverdlovskaya obl., 624070 (RU)
(72) Inventor: ALEKSEEV, Leonid Vladimirovich, g. Sredneuralsk Sverdlovskaya oblast, 624070 (RU); PISAREV, Viktor Georgievich, Artemovsky Sverdlovskaya oblast, 623782 (RU)
(74) Representative: Chimini, Francesco
(86) International application number: PCT/RU2021/000520
(87) International publication number: WO 2022/146178

(57) **Abstract**

The invention relates to the field of autonomous electronic equipment powered by autonomous sources with a limited reserve of power and can be used in various electronic devices with autonomous power supply and with a short operation cycle triggered by a signal as necessary, or with a long standby cycle, when a minimum consumption of battery power is required. The technical result is the maximum saving of power in an autonomous power source. A energy-saving method for the locking system by implementing the following steps: Energy-saving circuit for the battery of the key in the electronic control board of the electronic key at the end of the operation cycle, as triggered by a signal from the microcontroller from the input two OR a signal that switches the controlled power source into the energy-saving mode, wherein the power supply from the power source to the control circuit, including the microcontroller, is completely turned off; if it is necessary to turn on the controlled power source of the key, the board of the electronic is powered by the battery of the key and sends a special signal to the electronic key through the power supply contact and through a specialized circuit designed to identify the powering on attribute from an external event, and a special energy-saving circuit activates an electric signal fed to the input one OR for switching the power source to the operation mode for the time that will be sufficient to start the microcontroller, wherein the specialized circuit designed to identify the powering on attribute in an external event does not use the power of the battery; after the first initialization, the microcontroller sends an output signal to the input two OR sends a signal to keep the power source turned on for the duration of the operation cycle, after the end of which the microcontroller receives the signal from the input two OR and switches the power source to energy-saving mode.

## Description

### Technical Field

The invention relates to the field of autonomous electronic equipment powered by autonomous sources with a limited reserve of power and can be used in various electronic devices with autonomous power supply and with a short operation cycle triggered by a signal as necessary, or with a long standby cycle, when a minimum consumption of battery power is required.

### Prior Art

A energy-saving method for an autonomous transceiver of radio-hydroacoustic sea buoy (patent for invention No. RU2653403 published on April 28, 2018) is known from the prior art and consists in switching the transceiver into the active mode during a communication session and switching it into a standby mode during the pauses between the communication sessions by using the first microcontroller (MC1), and that method is characterized in that it uses the second microcontroller (MK2) in the standby mode to additionally lower the clock frequency of MC1 and, during a communication session, it uses an accelerometer to track the position of that accelerometer and turn on the transmitter when such accelerometer indicates a position which is close to the peak of the sea wave.

A disadvantage of this energy-saving method is that the control circuit and the microcontroller are not turned off in standby mode and continue to consume power, though in energy-saving mode. In this case, the power consumption by the control circuit, including the microcontroller, is greater than the self-discharge of the battery by an order of magnitude. Since the transition to the operation mode triggered by an external event is performed by a built-in control algorithm, the power cannot be turned off for such algorithms to reduce the power consumption in standby mode during the transition to the sleep mode with low power consumption activated by control commands. If the power is turned off by using the control circuit, it will be impossible to control the transition to the operation mode.

A wireless multi-gas sensor with remote activation by radio signal is known from the prior art (patentNo. RU170020). A wireless multi-gas sensor containing sensors with analog and digital outputs connected to a switch, an analog measurement component, a transceiver, a microcontroller for controlling the operation modes of the device, a power supply circuit for sensors and the entire device, an autonomous power source characterized in that an HF circuit is connected to the external interrupt input of the microcontroller to ensure the transition of the sensor from standby mode when it detects an external radio signal at specific power level and the ability to switch the sensor to the transmission mode in order to send the data stored in the microcontroller's memory.

A disadvantage of that technical solution is the use of operation scheme where the power supply fails to completely disconnect the control circuit, including the microcontroller, and the device continues to consume power at a level which, by an order of magnitude, is greater than the self-discharge of the battery and, therefore, such technical solution fails to ensure a theoretically maximum power savings for an autonomous power source.

The nearest technical solutions selected as a prototype are the method and device to start the energy-saving mode (patent for invention No. RU2663212 published on July 27, 2018). A method for starting the energy-saving mode comprising the steps wherein: a communication parameter with the gateway device is received, with such communication parameter containing at least one of the communication quality parameters and a preset period of inactivity; the current operating state is determined in accordance with the communication parameter; and the energy-saving mode is started if it is determined that the current operation mode is the inactivity state; wherein the start of the energy-saving mode comprises: closing at least one already started target application; with such closing of at least one already started target application comprising the steps at which: at least one target application is determined, having priority below the preset priority in accordance with the priority of already started application; and at least one target application is closed. Therefore, in accordance with the initial condition of meeting the user's need for the performance of a smart device, the power consumption of such smart device is reduced as much as possible.

A disadvantage of such prototype is the fact that such smart control device turns off all unnecessary functions and controlled peripherals, but it does not turn itself off to standby mode and continues to consume power at a level, which is much greater than the self-discharge of the battery, even though this is its maximum energy-saving mode. If such smart control device is completely powered off, it will be impossible to control the transition back to the operation mode.

In this application for an invention, the term "locking system" means a locking system, which includes an electronic lock and an electronic key and is powered by the battery of the key. The electronic key includes a battery case, an electronic control board, a special tailpiece, and is equipped with a circuit for automatically powering off/on the electronic control board to save the charge of the battery of the electronic key. In its tailpiece, the electronic key has two contacts, including a common contact always connected to the negative terminal (case) and positive terminal, with both of these contacts used to supply power from the battery of the key and ensure two-way exchange of encrypted data with the control board of the lock. The electronic lock contains a mechanical locking component, mating contacts for connection to the tailpiece of the key, an electronic control board with an automatic power off/on circuit of the electronic control board to save the charge of the battery of the key.

### Summary of the Invention

The objective of the claimed invention is to eliminate the above disadvantages.

The technical result, which the present invention aims to achieve, is to ensure the maximum power savings by an electronic device powered by an autonomous power source in standby mode, wherein the microcontroller, as well as other items required for the operation of the device, are completely disconnected from the power source and can be turned on by a signal received from an external device, thereby achieving the maximum power savings in an autonomous power source.

A method proposed to achieve this technical result is the power saving in the locking system, which comprises the following steps:
a) Power saving circuit for the battery of the key in the electronic control board of the electronic key at the end of the operation cycle, as triggered by a signal from the microcontroller from the input two OR a signal that switches the controlled power source into the energy-saving mode, with the power supply from the power source to the control circuit, including the microcontroller, being completely turned off;
b) If it is necessary to turn on the controlled power source of the key, the board of the electronic key is powered by the battery of the key and sends a special signal to the electronic key through a power supply contact and through a specialized circuit designed to identify the powering on attribute in an external event, and a special energy-saving circuit activates an electric signal fed to the input one OR for switching the power source to the operation mode for the time that will be sufficient to start the microcontroller, wherein the specialized circuit designed to identify the powering on attribute in an external event does not use the power of the battery;
c) After the first initialization, the microcontroller sends an output signal to the input two OR sends a signal to keep the power source turned on for the duration of the operation cycle, after the end of which the microcontroller receives the signal from the input two OR and switches the power source to energy-saving mode.

### Preferred Embodiment of the Invention

Below are the preferred embodiments, which should not be seen as limiting other particular embodiments that are within the scope of legal protection, and which are obvious to those skilled in the art.

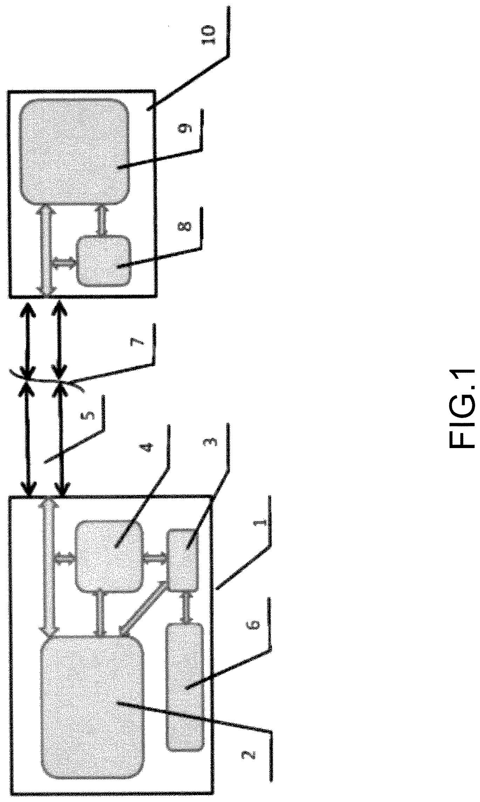

The essence of the invention is explained by but not limited to the drawings. Fig. 1 presents the block diagram of the locking system, where:
1 is the key (autonomous electronic device);
2 is the control circuit, including the microcontroller of the key, which has one of its output signals connected to the input two OR connected for turning on/off the power source;
3 is the energy-saving circuit of the key's battery;
4 is the specialized circuit designed to identify the signal from an external event in order to turn on the controlled power source;
5 is the tailpiece of the key with contacts to supply power and channel for receiving and sending data, including the reception of the signal from external event;
6 is the battery of the key;
7 indicates the connecting contacts of the lock and key;
8 is the energy-saving circuit in the battery of the key in the lock;
9 is the control circuit, including the microcontroller of the key, which has one of its output signals connected to the input two OR for turning on/off the power source.
10 is the electronic board of the lock.

The electronic board (10) of the lock has a energy-saving circuit (8) of the battery (6) of the key (1) which, following the completion of the operation cycle to identify the key (1) (in case of entering a wrong authorization access code), disconnects the control circuit (9) of the lock (including the microcontroller) from the power bus in order to save power before the key (1) is removed. The following steps are taken to extend the time of autonomous operation of the key (1): the electronic control circuit of the key has a energy-saving circuit (3) of the battery (6) of the key (1) which, following the completion of the operation cycle and at a signal received from the microcontroller, switches the power source into energy-saving mode that completely stops the power supply from the power source to the microcontroller and other elements required for the operation of the key (1). A special energy-saving circuit (8) of the battery (6) of the key (1) used in the electronic board (10) of the key includes a controlled power source with a circuit OR a circuit designed to identify the signal from an external event in order to send such signal to the input one OR to send such signal for turning on the controlled power source. The energy-saving circuit (3) of the battery (6) of the key (1) includes a controlled power source with a circuit OR. In the power off mode, the special energy-saving circuit (3) of the battery (6) of the key (1) consumes the power at a level equal to the self-discharge of the battery, thereby maximizing the battery life. The battery (6) is connected to the main electronic circuit of the key (1) only after the key (1) is inserted into the lock cylinder, where the lock connector contacts (7) and the key (1) communicate with each other. The electronic board (10) of the lock is powered by the battery (6) of the key (1) and, by sending a special signal to the key (1) through connector contacts (7) for power supply, and through specialized circuit (4) designed to identify the powering on attribute in an external event, and by using a special energy-saving circuit (3), it activates an electric signal fed to the input one OR fed for switching the power source to the operation mode for the time that will be sufficient to start the microcontroller and, in this case, the specialized circuit (4) designed to identify the powering on attribute in an external event does not use the power of the battery. The power source supplies the power to the control circuit (2) which, after the first initialization of the microcontroller, sends an output signal to the input two OR sends a signal to keep the power source turned on for the duration of the operation cycle, after the end of which the microcontroller receives the signal from the input two OR and switches the power source to energy-saving mode. In addition, the electronic board (10) of the lock has a energy-saving circuit (8) of the battery (6) of the key (1) which, following the completion of the operation cycle of the identification of the key, including a limited time provided for opening the lock, turns off the power of the lock control circuit supplied from the power bus to prevent the electronic board (10) of the key from consuming the power of the battery (6) of the key (1) before the key (1) is removed from the lock cylinder.

The energy-saving method for an autonomous device is used as follows: Once the operation cycle is complete, the power source is switched into energy-saving mode by a command from the microcontroller, and such energy-saving mode completely disconnects any power supply from the battery to the microcontroller and also disconnects other elements of the electronic control circuit required for the operation of the device. The controlled power source is turned on by a low-current signal identified from the control signal sent through the communication interface from an external device, where the attribute of the signal for turning on the power source may be a certain amplitude, duration, or frequency of the signal, and such signal is sent through a special circuit designed to identify such powering on attribute, which does not use the power of the battery while activating the electric signal from such external low-current control signal and switching the controlled power source into the operation mode. The controlled power source supplies power to the control circuit, including the microcontroller, which controls the execution of the operation cycle. After powering on, the microcontroller sends a power-on signal in accordance with its logic OR sends it to the input of the controlled power source to continue its operation for the required time, which is defined by an algorithm of the program loaded into the microcontroller. Once the operation cycle is complete, the microcontroller removes the power-on signal sent to the input of the controlled power source and switches such power source into the energy-saving mode, where the power supply from the battery to the microcontroller and other elements of the circuit required for the operation of the device is completely disconnected. This includes the use of a special power source, which can be controlled by turning it on/off and, theoretically, has the minimum power consumption in the power-off mode at the level equal to the self-discharge of the battery (less than 1 µA).

The embodiment of this method uses a circuit designed to identify, from a control signal sent via the external device communication interface used for exchanging the information with the external device, a signal (amplitude, or duration, or frequency) which enables, without using the power of the battery, to turn on the controlled power source and sustain the signal for the time sufficient for allowing the microcontroller (after it is powered on) to perform the first initialization, testing, and send a power-on signal in accordance with its logic OR send it to the input of the controlled power source in order to continue its operation for the required time, which is defined by an algorithm of the program loaded into the microcontroller. Once the operation cycle is complete, the microcontroller removes the power-on signal sent to the input of the controlled power source and switches such power source into the energy-saving mode, where the power supply from the battery to the microcontroller and other elements of the circuit required for the operation of the device is completely disconnected.

The review of patent, scientific and technical literature has not revealed any technical solution with a similar set of essential features, which allows to conclude that the claimed invention meets the criterion of novelty.

The claimed set of essential features that ensure the said technical result is not obvious from the prior art, which allows to conclude that the claimed invention meets the patentability condition of inventive level.

## Claims

1. A energy-saving method for the locking system, as implemented by the following steps:
a) Energy-saving circuit for the battery of the key in the electronic control board of the electronic key at the end of the operation cycle, as triggered by a signal from the microcontroller from the input two OR a signal that switches the controlled power source into the energy-saving mode, wherein the power supply from the power source to the control circuit, including the microcontroller, is completely turned off;
b) If it is necessary to turn on the controlled power source of the key, the board of the electronic key is powered by the battery of the key and sends a special signal to the electronic key through a power supply contact and through a specialized circuit designed to identify the powering on attribute in an external event, and a special energy-saving circuit activates an electric signal fed to the input one OR for switching the power source to the operation mode for the time that will be sufficient to start the microcontroller, wherein the specialized circuit designed to identify the powering on attribute in an external event does not use the power of the battery;
c) After the first initialization, the microcontroller sends an output signal to the input two OR sends a signal to keep the power source turned on for the duration of the operation cycle, after the end of which the microcontroller receives the signal from the input two OR and switches the power source to energy-saving mode.

2. A energy-saving method for the locking system according to claim 1 **characterized in that** the signal to the key is sent by communicating a wake-up signal through the power supply contact and through a special circuit designed to identify such powering on attribute, which does not use the power of the battery.
